# EUROPEAN PATENT APPLICATION

(11) **EP 2 192 768 A1**
(43) Date of publication of application: **02.06.2010**
(21) Application number: 08022516.2
(22) Date of filing: 29.12.2008
(51) Int. Cl.: H04N 5/76

(54) **Method for generating and accessing a scheduled program list and multimedia device for the same**

(30) Priority: 26.11.2008 US 323482
(71) Applicant: MediaTek Inc., Hsin-Chu (TW)
(72) Inventor: Chen, Jaan-Huei, Taipei Hsien (TW)
(74) Representative: Hager, Thomas Johannes

(57) **Abstract**

The configuration of the data link (15,25) between a multimedia device (10,20) and a network-ready external host (30) allows the external host (30) for accessing the media files in the multimedia device (10,20) and performing scheduling recording. By generating the scheduled program list and converting the scheduled program list into program files, the information of scheduled programs from EPG according to scheduling information from the external host (30) end can be converted into a series of media files stored in a hierarchical way for being copied and played by the external host (30).

## Description

The present invention relates to a method and related multimedia device according to the pre-characterizing clauses of claims 1, 7.

In some products according to the prior art, adding the network connection function to a TV set or HDD/DVD recorder takes a lot increase in cost, and so does making the network-ready devices capable of recording digital broadcasting programs.

Additionally, when a user wants to make a scheduling recording through a HDD/DVD recorder or a digital TV set, setting the scheduling recording always requires the user to do it in front of the machine. Remote operation is not an option for scheduling recording through the HDD/DVD recorder or the digital TV set. And finally, PCs or game consoles nowadays almost have the ability to play various kinds of media files, including video files or audio files with many kinds of formats. However, not being able to access the recorded programs (or the program information in audio/video format) on the digital TV set or the HDD/DVD recorder by operating from a PC or a game console apparently limits the functionality of both the PC (or the game console) and the digital TV set (or the HDD/DVD recorder).

This in mind, the present invention aims at providing a method and relative multimedia device that allow a user to record programs on a multimedia device remotely by operating from a PC or a game console.

This is achieved by methods and relative multimedia device according to claims 1, 7. The dependent claims pertain to corresponding further developments and improvements.

As will be seen more clearly from the detailed description following below, the claimed method includes a step that establishes a data link between a multimedia device and an external host, and the claimed multimedia device includes a data link coupled to a PVR module and to an external host for the external host to access stored data blocks.

In the following, the invention is further illustrated by way of example, taking reference to the accompanying drawings. Thereof
- Fig.1: is an illustration of the method for generating and accessing scheduled program list,
- Fig.2: is an illustration of a first exemplary embodiment of the multimedia device according to the present invention,
- Fig.3: is an illustration of a second exemplary embodiment of the multimedia device according to the present invention,
- Fig.4: is an illustration of the mapping relation between the partitions of the storage medium and the logical units of the USB device,
- Fig.5: is an illustration of the hierarchical file system of the EPG data stored in the storage medium, and
- Fig.6: is an illustration of the hierarchical file system of the scheduled program files stored in the storage medium.

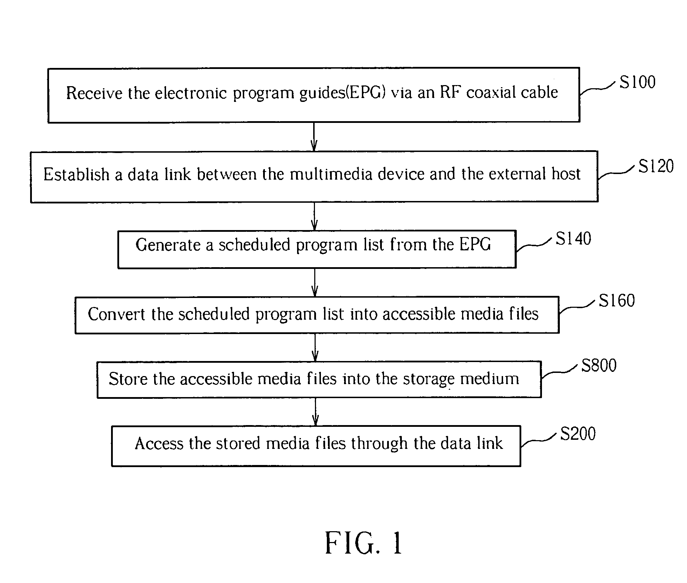

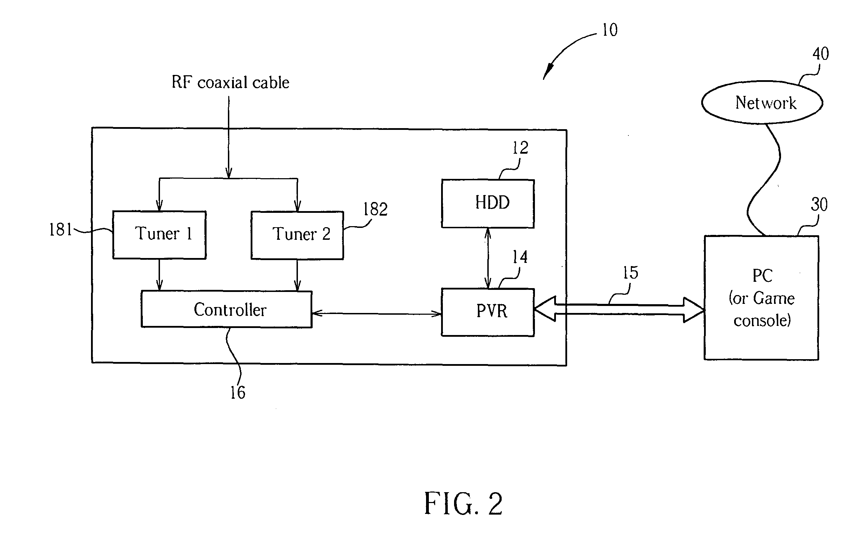

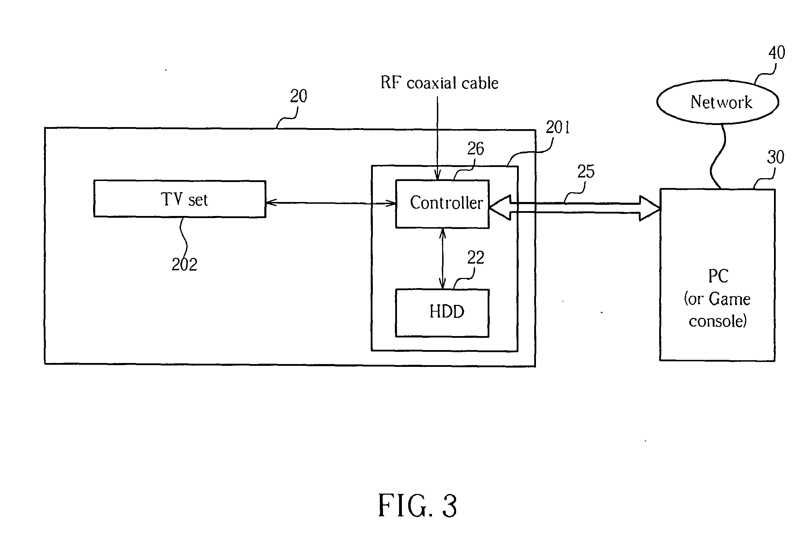

The present invention provides a method accompanying a multimedia device for generating and accessing scheduled program list. The scheduled program list is mainly generated from electronic program guides (EPG), a digital multimedia data regarding the programs broadcasted through digital carriers, either the video broadcasting or the audio broadcasting. Please refer to Fig.1 and Fig.2. Fig.1 is an illustration of the method for generating and accessing scheduled program list, and Fig.2 is an illustration of a first exemplary embodiment of the multimedia device 10 according to the present invention. The multimedia device 10 comprises a storage medium 12 which generally is a high speed hard disk drive (HDD) or a memory for storing accessible files, a personal video recorder (PVR) module 14 where the storage medium 12 is coupled to the PVR module 14, a controller 16 coupled to the PVR module 14, and a tuner 181 (or more than one tuner, i.e. two or more tuners 181,182 for simultaneously scheduling and recording with more than one programs) coupled to the controller 16 and to the RF coaxial cable. The PVR module 14 is for recording the program received by the controller 16 from the RF coaxial cable according to the scheduled program list and is further coupled to an external host 30 (such as a PC or a game console) that connects with a network 40 via a data link 15 where the external host 30 or any network-ready device from the network 40 can access media files in the storage medium 12 through the data link 15. A second exemplary embodiment according to the present invention realizes the method for generating and accessing scheduled program list with a HDD recorder or a set-top box as shown in Fig.3. The multimedia device 20 in Fig.3 comprises a recorder 201 (HDD recorder or set-top box) and a TV set 202. The TV set 202 is for playing programs received by the recorder 201. The recorder 201 comprises a controller 26 that has the same functions as the controller 16 and the PVR module 14 in the first exemplary embodiment in Fig.2. A storage medium 22 is also coupled to the controller 26 for storing accessible files. The controller 26 is further coupled to the external host 30 via a data link 25 so that the external host 30 can access media files in the storage medium 22 through the data link 25. The method of the present invention has steps as followed:

| | |
|---|---|
| Step S100: | the multimedia device receives the electronic program guides (EPG) from the program provider via an RF coaxial cable; |
| Step S120: | configure the USB port of the multimedia device as device mode (or USB on-the-go mode) for the external host and establish a data link between the multimedia device and the external host; |
| Step S140: | the multimedia device generates a scheduled program list from the EPG; |
| Step S160: | convert the scheduled program list generated in Step S160 into accessible media files; |
| Step S180: | store the accessible media files into the storage medium; |
| Step S200: | the external host access the stored media files through the data link. |

Take the first exemplary embodiment in Fig.2 for example, the multimedia device 10 can be a digital TV with USB port for external USB device. Generally, the controller 16 of the multimedia device 10 connects to an RF coaxial cable for receiving and updating EPG and digital programs from the program provider (Step S100). One or more tuners 181, 182 are coupled between the RF coaxial cable and the controller 16 for changing channels and receiving programs from the selected channel so that the multimedia device 10 can play programs in selected channel (or channels if the multimedia device 10 has more than one tuner as the exemplary embodiment in Fig.2). Generally the external host 30 can be a personal computer, a game console or any network-ready device that has network connection capability and both the multimedia device 10 and the external host 30 have one or more USB-compatible ports and therefore, the data link 15 is an USB-compatible link in the exemplary embodiment while other connecting interfaces such as IEEE 1 394(firewire) can be applied as the data link 15 between the multimedia device 10 and the external host 30. The present invention configures the USB port of the multimedia device 10 as device mode by the controller 16 (Step S120) so that after establishing the data link 15 between the multimedia device 10 and the external host 30 by connecting the USB ports at both end, the external host 30 detects the multimedia device 10 as a USB device that contains accessible files.

The controller 16 of the multimedia device 10 can generate a scheduled program list from the EPG received via the RF coaxial cable. According to some user operation from the network 40, the preferred scheduling recording information can be transmitted to the multimedia device 10 from the external host 30 and the controller 16 generates the scheduled program list according to the scheduling recording information (Step S140). Then the controller 16 converts the scheduled program list into various accessible media files (Step S160) and the PVR module 14 (or the controller 16 itself) can store the accessible media files into the storage medium 12 (Step S180). Finally, the external host 30 can access the media files in the storage medium 12 since the multimedia device 10 is treated as an USB device by the external host 30 after the data link 15 is established.

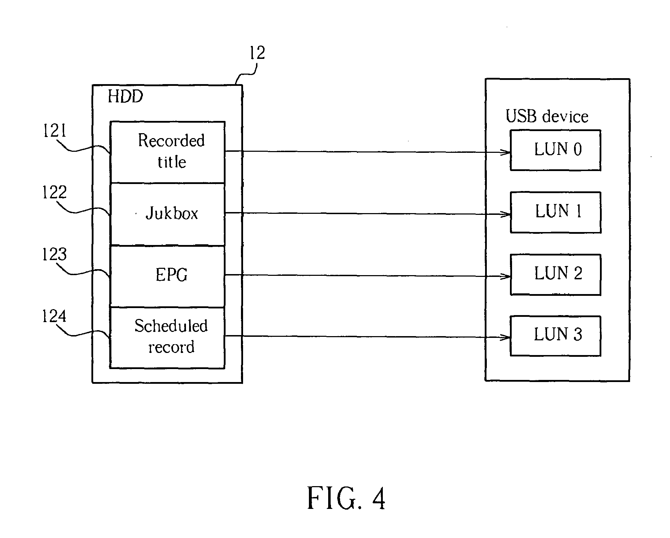

Please refer to Fig.4. To configure the USB port of the multimedia device 10 as a device for the external host 30 as Step S120 shows, the PVR module 14 (or the controller 26 in Fig.3) configures the storage medium 12 as four partitions that map into four individual USB logical units in one USB device. The first partition 121 storing the recorded title is mapped into LUN 0 (logical unit 0), the second partition 122 storing the jukebox files (such as MP3 files or photo files) is mapped into LUN 1, the third partition 123 storing the EPG data is mapped into LUN 2, and the fourth partition 124 storing the scheduled program files is mapped into LUN 3. After the data link 15 is established between the multimedia device 10 and the external host 30, the external host 30 detects a USB hub having four USB devices (that map into four partitions in the storage medium 12). The external host 30 can access the files in the devices.

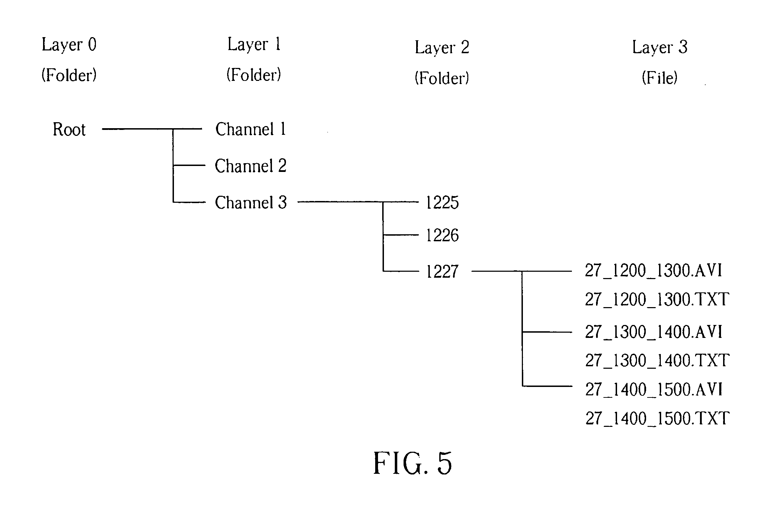

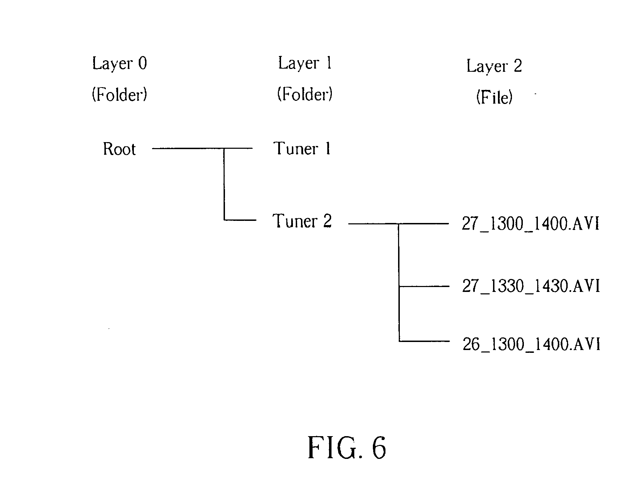

Please refer to Fig.5. As mentioned previously, the third partition 123 of the storage medium 12 stores the original EPG data, which is generated and stored by the controller 16 from the EPG received from the RF coaxial cable. The EPG data is stored in the third partition 1 23 in a hierarchical file system. To provide the external host 30 with maximal compatibility, the file system in the partitions of the storage medium can be file allocation table (FAT) format and all the USB devices of the multimedia device 10 in Fig.4 are with mass storage protocol so that the external host 30 can access the storage medium 12 in a most compatible way, i.e. the external host 30 uses logical address to access the files in the storage medium 12 through the data link 15. Please also refer to Fig.6, which is an illustration of a hierarchical file system of the fourth partition 124 that stores the scheduled program files. The controller 16 generates the original EPG data according to the EPG and stores the original EPG data in the third partition 123. The original EPG data are stored in the file system with layer 1 as channel folders, layer 2 as date folders, and layer 3 as program files. The program files in layer 3 are exemplified by beginning with date followed by an underline and the start time and the stop time of the program. Two video objects .AVI and .TXT are stored for each program files where the .AVI file is the content of the program information of the EPG and the .TXT is descriptive text to be rendered into the .AVI file when the program information is in the scheduled program list. The .AVI format video file has the most compatibility for the external host 30 to successfully access and it is also a common video format to easily render a text file as the subtitle. However, the format of the generated video file can also be media file compatible with MPEG-4 format file in the present invention.

In Fig.6, the file system in the fourth partition 124 is also hierarchical but is a read/write file system for allowing the external host 30 to access. The program files are stored in the file system of the fourth partition 124 with layer 1 as tuner folders (if there are more one tuner in the multimedia device 10) and with layer 2 as program files. The program files in the fourth partition 124 have similar file examples as that in the third partition 123. After the multimedia device 10 receives the scheduling recording information from the external host 30, a series of program information can be "picked" from the EPG and the controller 16 forms a scheduled program list. Then the external host 30 controls the controller 16 to converts the scheduled program list into a plurality of program files by merging the .AVI file with the .TXT file of the program files on the scheduled program list and copying the merged .AVI file to the address occupied by the corresponding file name of the program files in the fourth partition 124. In the exemplary embodiment, the program files are generated into a plurality of data block and moved on the data block basis. Generally, all the program files in the scheduled program list are converted and stored in the fourth partition 124 once the scheduled program list is generated. However, to save the disk space, the .AVI files in the fourth partition 124 can be generated in a run-time manner whenever the external host 30 selects the very program information.

Since the multimedia device 10 (or more precisely, the storage medium 12) is viewed as a USB device (an removable medium since the data link 15 is detachable) by the external host 30, the external host 30 accesses the media files in the storage medium 12 such as copying the media files from one address (partition) to another address (partition) and playing the media files on the multimedia device 10 or on a display. Secondly, since the multimedia device 10 has the capability to receive the digital broadcasting programs and EPG via the RF coaxial cable, the multimedia device 10 stores the EPG and provides updated EPG data for the external host 30. Once the data link 15 is detached, the controller 16 can receive new EPG and generate new EPG data or re-schedule the original EPG data if EPG is refreshed. And the scheduled program files in the fourth partition 124 are parsed if needed. After the update of EPG is completed, the data link 15 is reattached for providing updated information for the external host 30.

The invention can be summarized as the method and multimedia device configures the data link between the multimedia device and a network-ready external host so that the external host can access the media files in the multimedia device and perform scheduling recording. By generating the scheduled program list and converting the scheduled program list into program files, the information of scheduled programs from EPG according to scheduling information from the external host end can be converted into a series of media files stored in a hierarchical way for being copied and played by the external host. All combinations and sub-combinations of the above-described features also belong to the invention.

## Claims

1. A method for generating and accessing scheduled program list, a multimedia device (10,20) generating the scheduled program list according to electronic program guides (EPG) and an external host (30) accessing the scheduled program list, comprising:
updating electronic program guides (EPG) in the multimedia device (10,20);
generating a scheduled program list from the EPG;
converting the scheduled program list into a plurality of data blocks;
storing the plurality of data blocks in a storage medium (12,22); and
**characterized by**:
establishing a data link (15,25) between the multimedia device (10,20) and the external host (30); and
accessing the stored data blocks through the data link (1 5,25).

2. The method of claim 1, **characterized in that** accessing the stored data blocks through the data link (15,25) comprises the external host (30) copying the data block from a first address to a second address in the storage medium (12,22) , and the method is further **characterized by**:
dividing the storage medium (12,22) into a first partition and a second partition; and
the external host (30) copying the data block from the first partition to the second partition.

3. The method of claim 1, **characterized in that** establishing a data link (15,25) between the multimedia device (10,20) and the external host (30) is further **characterized by**:
dividing the storage medium (12,22) into a first partition and a second partition; and
mapping the first partition and the second partition into a first logical unit and a second logical unit in the data link (15,25).

4. The method of claim 1, further **characterized by**:
detaching the data link (15,25) between the multimedia device (10,20) and the external host (30) before updating electronic program guides (EPG) in the multimedia device (10,20); and
reattaching the data link (1 5,25) after completing updating EPG in the multimedia device (10,20).

5. The method of claim 1, **characterized in that** accessing the stored data blocks through the data link (15,25) comprises the external host (30) using logical address to access the stored data blocks through the data link (15,25).

6. The method of claim 1, further **characterized by** receiving programs via a RF coaxial cable and recording the programs according to the scheduled program list.

7. A multimedia device (10,20) capable of generating a scheduled program list , comprising:
a storage medium (12,22);
a controller (16,26) for updating electronic program guides for programs, generating a scheduled program list from the electronic program guides, and converting the scheduled program list into a plurality of data blocks;
a personal video recording module (14) coupled to the controller (16,26) for storing the plurality of data blocks in the storage medium (12,22); and
**characterized by**:
a data link (15,25) coupled to the personal video recording module (14) and to an external host (30) for the external host (30 to access the stored data blocks.

8. The multimedia device of claim 7 **characterized in that** the controller (16,26) is coupled to an RF coaxial cable for updating EPG for programs and receiving programs and the multimedia device (10,20) is further **characterized by** a tuner coupled to the RF coaxial cable for changing channels and receiving programs from selected channels.

9. The multimedia device (10,20) of claim 7, **characterized in that** the storage medium (12,22) comprises a first address and a second address, the data link (15,2S) is for providing the external host (30) to copy the data blocks from the first address to the second address.

10. The multimedia device (10,20) of claim 7, **characterized in that** the storage medium (12,22) comprises a first partition and a second partition, the data link (15,25) comprises a first logical unit for mapping into the first partition and a second logical unit for mapping into the second partition.
